# EUROPÄISCHE PATENTANMELDUNG

(11) **EP 0 581 060 A1**
(43) Veröffentlichungstag der Anmeldung: **02.02.1994**
(21) Anmeldenummer: 93110732.0
(22) Anmeldetag: 05.07.1993
(51) Int. Cl.: H01G 9/06

(54) **Aluminium-Elektrolytkondensator**

(30) Priorität: 31.07.1992 DE 4225384
(71) Anmelder: SIEMENS MATSUSHITA COMPONENTS GmbH & CO KG, D-81617 München (DE)
(72) Erfinder: Will, Norbert, Dipl.-Phys., D-89522 Heidenheim (DE)
(74) Vertreter: Fuchs, Franz-Josef, Dr.-Ing.

(57) **Zusammenfassung**

Ein Aluminium-Elektrolytkondensator besteht aus einem Kondensatorwickel (1), der in ein Gehäuse (2) eingebaut ist, das mit einer Deckscheibe (3) verschlossen ist. Im Gehäuse (2) sind Mittel angeordnet, die eine Entmischung der Bestandteile des Betriebselektrolyts verhindern.

## Beschreibung

Die Erfindung betrifft einen Aluminium-Elektrolytkondensator, insbesondere für hohe Wechselstrombelastungen, der aus einem Kondensatorwickel aus mit einer dielektrisch wirksamen Sperrschicht versehenen Anodenfolie, mit einem Betriebselektrolyt getränkten Abstandshaltern und einer Katodenfolie besteht und der in ein, insbesondere metallisches Gehäuse eingebaut ist.

Die Lebensdauer derartiger Elektrolytkondensatoren ist von der Temperaturbelastung abhängig. Ganz allgemein kann gesagt werden, daß mit steigenden Betriebstemperaturen die Lebensdauer verkürzt wird. Dies ist darauf zurückzuführen, daß mit steigenden Temperaturen die Diffusion des Elektrolyts aus dem Kondensator heraus durch die Dichtungselemente zunimmt und andererseits die Folien durch den Elektrolyt angegriffen werden.

Es hat sich nun herausgestellt, daß bei Dauerversuchen mit hoher Wechselstrombelastung wesentlich kürzere Brauchbarkeitsdauern ermittelt wurden als aufgrund der maximalen Wickeltemperatur und der Oberflächentemperatur als Lebensdauer des Kondensators zu erwarten wäre.

Aufgabe der Erfindung ist es daher, den eingangs genannten Aluminium-Elektrolytkondensator derart weiterzubilden, daß seine Lebensdauer auch bei hohen Wechselstrombelastungen verlängert wird.

Diese Aufgabe wird erfindungsgemäß dadurch gelöst, daß im Gehäuse Mittel angeordnet sind, die eine Entmischung der Bestandteile des Betriebselektrolyts verhindern.

Zweckmäßige Ausgestaltungen der Erfindung sind in den Unteransprüchen angeführt.

Die Erfindung wird anhand der folgenden Ausführungsbeispiele erläutert.

In der dazugehörenden Zeichnung zeigen
- FIG 1: einen herkömmlichen Elektrolytkondensator,
- FIG 2 bis 5: verschiedene Ausführungsbeispiele eines Kondensators nach der Erfindung und
- FIG 6: Dauerversuche an herkömmlichen und an Kondensatoren nach der Erfindung.

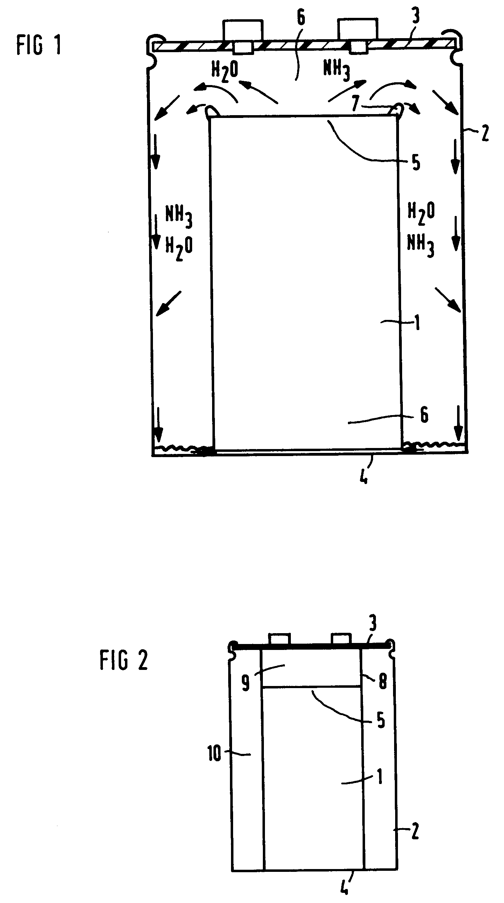

In der FIG 1 ist ein Kondensatorwickel 1 dargestellt, der in herkömmlicher Weise in ein metallisches Gehäuse 2 eingebaut ist, das durch eine Kunststoffabschlußscheibe 3 verschlossen ist. Der Boden 4 des Gehäuses 2 wird mittels einer Zwangskühlung abgekühlt. Bei hohen Wechselstrombelastungen wird der Kondensatorwickel 1 besonders im Bereich der oberen Wickelstirnfläche 5 stark erwärmt. Dies hat zur Folge, daß die leicht flüchtigen Elektrolytbestandteile (z. B. Wasser (H₂O), Ammoniak (NH₃)) verdunsten und sich aufgrund ihrer Partialdrucke im Leervolumen 6 oberhalb des Wickels 1 verteilen. Ohne Wechselstrombelastungen hätten alle Wände des Leervolumens die gleiche Temperatur und die Gasverteilung wäre im Gleichgewicht. Bei Wechselstrombelastung ist jedoch das Gehäuse 1 und der untere Teil, insbesondere der Boden 4 durch die Zwangskühlung kälter. Das "Elektrolytgas" kondensiert am kühleren Gehäuse 1 sowie am kälteren unteren Teil 6 des Wickels 1 und fließt zum Becherboden 4, wo der Elektrolyt vom Wickel 1 wieder aufgesaugt werden kann.

Beim Abdampfen von der oberen Wickelstirnfläche 5 bleiben die weniger flüchtigen Elektrolytbestandteile (z. B. Borsäure, Glykol) übrig und treten nicht in das "Elektrolyt-Gas" über. Somit wird die Elektrolyt-Zusammensetzung geändert. In Extremfällen, wie insbesondere bei zwangsgekühlten Hochstromelektrolytkondensatoren mit ca. 20 K Temperaturdifferenz, bilden sich Kristalle 7 am Rand der oberen Stirnfläche.

In der FIG 2 ist ein erstes Ausführungsbeispiel eines Elektrolytkondensators nach der Erfindung dargestellt, bei dem um den Kondensatorwickel 1 zumindest eine Lage einer gasundurchlässigen Folie 8 gewickelt ist, die bis zur Deckscheibe 3 reicht. Die Folie 8 kann dabei bis zum Becherboden 4 reichen oder auch nur einen Teil des Wickels 1 umhüllen.

Durch diese Ausgestaltung wird der anhand der FIG 1 beschriebene Kondensationskreislauf durch Teilen des Leervolumens in eine "warme" Zone 9 und eine "kalte" Zone 10 unterbrochen. In der "warmen" Zone 9 fließt das austretende Kondensat wieder auf die obere Wickelstirnfläche 5 zurück, so daß keine Entmischung des Elektrolyts stattfindet.

Es ist auch möglich, daß die Folie 8 nur teilweise in den Raum zwischen Deckscheibe 2 und Wickeloberseite 5 reicht. Hiermit wird der Trenneffekt ebenfalls überwiegend erreicht, weil die kritischste Stelle der äußere Rand der oberen Wickelstirnfläche 5 weiter von der nächsten kalten Stelle entfernt ist.

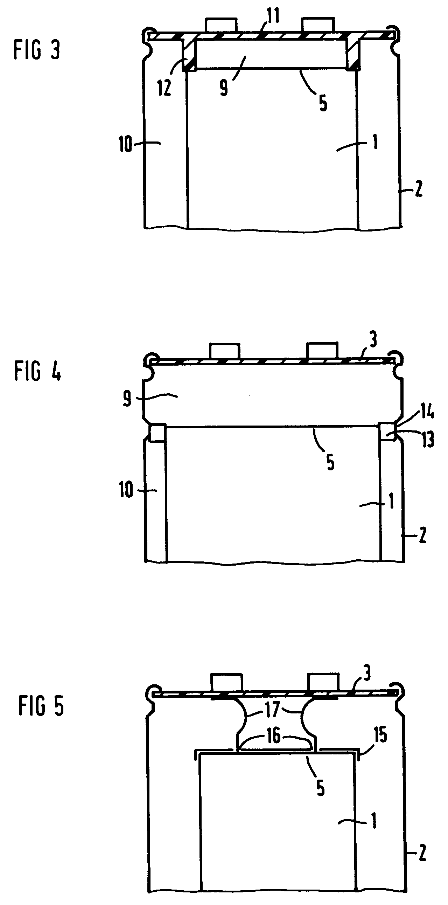

In der FIG 3 ist eine weitere Ausführungsform dargestellt, bei der die das Kondensatorgehäuse 2 abschließende Trennscheibe 11 eine ringförmige Rippe 12 aufweist, die von oben auf den äußeren Rand des Wickels 1 drückt. Auch hier-druch wird das Leervolumen in eine "warme" Zone 9 und eine "kalte" Zone 10 geteilt. In der ringförmigen Rippe 12 kann ein Ventil angeordnet sein, das gleichzeitig beide Zonen 9 bzw. 10 absichert.

In der FIG 4 ist ein Ausführungsbeispiel gezeigt, bei der um den oberen Teil des Kondensatorwickels 1 ein dehnbarer Ring 13 aus Gummi oder Kunststoff gelegt ist, auf den eine im Kondensatorgehäuse 2 angeordnete Sicke 14 drückt. Auch bei dieser Ausführung erfolgt eine Trennung des Leervolumens in zwei Zonen 9 und 10. Der Innendurchmesser des Rings 13 kann dabei in Abhängigkeit vom Durchmesser des Wickels 1 variieren.

Bei dem Ausführungsbeispiel nach FIG 4 ist es auch möglich, insbesondere bei größeren Durchmessern eines Kondensatorwickels auf den Ring 13 zu verzichten und die Sicke 14 bis zur oberen Kante des Wickels 1 auszuformen.

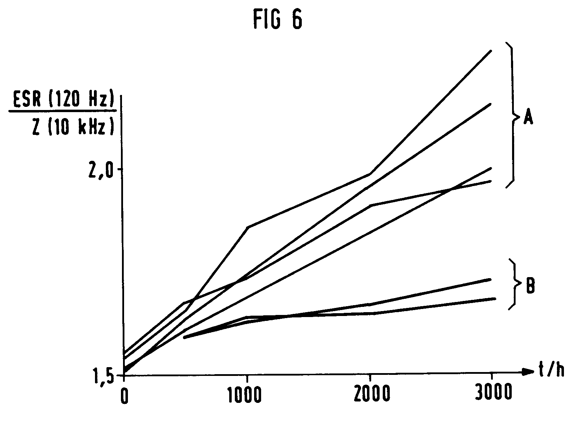

In der FIG 5 ist ein Kondensatorwickel 1 dargestellt, bei dem die obere Wickelstirnfläche 5 durch eine gasundurchlässige Folie oder Scheibe 15 abgedeckt ist, die die Wickelstirnfläche 5 teilweise umgreift. In der Folie bzw. Scheibe 15 sind nur Öffnungen 16 für die elektrischen Anschlüsse 17 angeordnet, die gleichzeitig ausreichen, um einen nötigen Austritt von beim Betrieb entstehenden Wasserstoffgas zu ermöglichen. Die gasundurchlässige Folie bzw. Scheibe 15 dient bei diesem Ausführungsbeispiel als Diffusionssperre, die ein Abdampfen von Elektrolytbestandteilen verhindert.

Für bestimmte Anwendungsfälle ist es ausreichend, wenn die gasundurchlässige Folie bzw. Scheibe 15 nur ringförmig ausgebildet ist, die den äußeren oberen Rand des Kondensatorwickels 1 abschirmt. Auch hierdurch wird ausreichend verhindert, daß der Elektrolyt entmischt wird.

In einem Dauerversuch wurden zwei Elektrolytkondensatoren nach dem Ausführungsbeispiel, das in FIG 2 dargestellt ist, mit den Nenndaten 4000 µF/350 V über 3000 h mit einer Wechselstrombelastung von 160 A/20 kHz und einer Zwangskühlung, die die Gehäusetemperatur auf 65 °C abkühlte, beaufschlagt. Hierbei ergab sich am Ende des Versuchs ein Verlustfaktor tan (120 Hz) von 3,1 %, während an vier herkömmlichen Elektrolytkondensatoren nach FIG 1 ein Mittelwert von 4,1 % gemessen wurde.

Noch deutlicher ist die verlangsamte Degeneration der Elektrolytkondensatoren nach der Erfindung im Dauerversuch im Verhältnis von Ersatzserienwiderstand ESR (120 Hz) zum Scheinwiderstandswert (Z) bei 10 kHz zu erkennen. Diese Meßwerte sind in der FIG 6 wiedergegeben, wobei sich die Kurven A auf die herkömmlichen Kondensatoren beziehen und die Kurven B an Elektrolytkondensatoren nach der FIG 2 bestimmt wurden.

Es ergibt sich somit, daß die Elektrolytkondensatoren nach der Erfindung auch bei hohen Wechselstrombelastungen eine deutlich höhere Brauchbarkeitsdauer als herkömmliche Elektrolytkondensatoren aufweisen.

## Patentansprüche

1. Aluminium-Elektrolytkondensator, insbesondere für hohe Wechselstrombelastungen, die aus einem Kondensatorwickel (1) aus mit einer dielektrischen wirksamen Sperrschicht versehenen Anodenfolie, mit einem Betriebselektrolyt getränkten Abstandshaltern und einer Katodenfolie besteht, und der in ein, insbesondere metallisches, Gehäuse (2) eingebaut ist,
**dadurch gekennzeichnet,**
daß im Gehäuse (2) Mittel angeordnet sind, die eine Entmischung der Bestandteile des Betriebselektrolyts verhindern.

2. Kondensator nach Anspruch 1,
**dadurch gekennzeichnet,**
daß die Mittel das Gehäusevolumen (9) oberhalb des Kondensatorwickels (1) vom restlichen Gehäusevolumen (10) zumindest teilweise abtrennen.

3. Kondensator nach Anspruch 2,
**dadurch gekennzeichnet,**
daß um den Kondensatorwickel (1) eine gasundurchlässige Folie (8) gewickelt ist, die den Kondensatorwickel (1) an seiner Oberseite (5) überragt.

4. Kondensator nach Anspruch 3,
**dadurch gekennzeichnet,**
daß die Folie (8) bis zu einer das Gehäuse (2) abschließenden Deckscheibe (3) reicht.

5. Kondensator nach Anspruch 3 oder 4,
**dadurch gekennzeichnet,**
daß die Folie (8) bis zum Gehäuseboden (4) reicht.

6. Kondensator nach Anspruch 2,
**dadurch gekennzeichnet,**
daß eine das Gehäuse (2) abschließende Deckscheibe (11) eine ringförmige Trennwand (12) aufweist, die bis zum Kondensatorwickel (1) reicht.

7. Kondensator nach Anspruch 2,
**dadurch gekennzeichnet,**
daß im Kondensatorgehäuse (2) eine Trenn-Sicke (14) angeordnet ist, die bis zur oberen Wickelkante (5) reicht.

8. Kondensator nach Anspruch 7,
**dadurch gekennzeichnet,**
daß zwischen Trenn-Sicke (14) und Kondensatorwickel (1) ein elastischer Ring (13) angeordnet ist.

9. Kondensator nach Anspruch 1,
**dadurch gekennzeichnet,**
daß die Oberseite (5) des Kondensatorwickels (1) zumindest teilweise an den äußeren Rändern durch eine gasundurchlässige Folie oder Kunststoffscheibe (15) abgedeckt ist.

10. Kondensator nach Anspruch 9,
**dadurch gekennzeichnet,**
daß die Abdeckung (15) die Seitenflächen des Kondensatorwickels (1) umgreift.
